# EUROPÄISCHE PATENTSCHRIFT

(11) **EP 0 971 553 B1**
(45) Veröffentlichungstag und Bekanntmachung des Hinweises auf die Patenterteilung: **02.02.2005**
(21) Anmeldenummer: 99112571.7
(22) Anmeldetag: 01.07.1999
(51) Int. Cl.: H04Q 7/38, H04Q 7/22

(54) **Weiterreichen einer Paketdatenverbindung in einem Mobilfunknetz**
Handover of a packet data connection in a mobile network
Commutation d'une connexion en mode paquet dans un réseau mobile

(30) Priorität: 06.07.1998 DE 19830164; 27.10.1998 DE 19849578
(43) Veröffentlichungstag der Anmeldung: 12.01.2000
(73) Patentinhaber: SIEMENS AKTIENGESELLSCHAFT, 80333 München (DE)
(72) Erfinder: Kreppel, Jan, 82377 Penzberg (DE)

(56) Entgegenhaltungen:
- WO-A-98/59468
- US-A- 5 457 736

## Beschreibung

Die Erfindung betrifft ein Verfahren und ein Mobilfunknetz zur Behandlung eines Paketdatendienstes gemäß dem Oberbegriff des Patentanspruchs 1 bzw. des Patentanspruchs 15.

Für verbindungsorientierte Kommunikationsdienste in einem Kommunikationsnetz ist es bekanntlich möglich, die Verbindungen durch ein Intelligentes Netz (IN) steuern zu lassen. So ist beispielsweise für Mobilfunknetze nach dem GSM-Standard (Global System for Mobile Communication) eine CAMEL-Plattform (Customized Applications for Mobile network Enhanced Logic) gemäß der GSM-Empfehlung 03.78 definiert, um eine weltweite Nutzung der Leistungsmerkmale des Intelligenten Netzes zu ermöglichen. Die übliche Architektur des Intelligenten Netzes sieht eine Dienstevermittlungsfunktion (Service Switching Function) und eine Dienstesteuerungsfunktion (Service Control Function) vor, die über eine Signalisierungsstrecke miteinander verbunden sind. Als Applikation wird hierbei ein spezielles Protokoll verwendet, das für das Mobilfunknetz aus dem CAP-Protokoll (CAMEL Application Part) besteht.

US 5 457 736 offenbart ein System und ein Verfahren für die Bereitstellung von Microcellular Personal Communication Services (PCS) an Benutzer mit Handover-Funktionalität.

In bestehende Mobilfunknetze nach dem GSM-Standard werden derzeit neuartige Datendienste wie der Paketdatendienst GPRS (General Packet Radio Service) gemäß der GSM-Empfehlung 03.60 eingeführt. Die Übertragung im Mobilfunknetz findet hierbei nicht verbindungsorientiert, sondern in Form von Paketdaten statt. Diese Art der Übertragung nutzt die gegebenen Ubertragungsressourcen im Mobilfunknetz besser aus. Die Architektur für den Paketdatendienst geht davon aus, daß das vom mobilen Teilnehmer benutzte Kommunikationsendgerät - die Mobilstation - an ihrem jeweiligen Aufenthaltsort von einem Dienstenetzknoten (Serving GPRS Support Node) bedient wird. Um Paketdaten zu empfangen oder zu senden, ist der Zugang zu einem Paketdatennetz notwendig. Zu diesem Zweck werden Zugangsnetzknoten (Gateway GPRS Support Nodes) bereitgestellt, die jeweils den Zugang zu dem Paketdatennetz - z.B. Internet - realisieren und ein bestimmtes Paketdatenprotokoll - z.B. Internet Protokoll - unterstützen. Zwischen dem Dienstenetzknoten und dem Zugangsnetzknoten ist im Mobilfunknetz ein Tunnel vorgesehen, über den die Pakete übertragen werden. Da sich die mobilen Teilnehmer mit ihren Kommunikationsendgeräten zwischen mehreren Funkversorgungsgebieten eines Mobilfunknetzes bewegen, gelangt der einzelne Teilnehmer möglicherweise in das Versorgungsgebiet eines neuen Dienstenetzknotens, sodass der Tunnel umzuschalten ist und die Pakete auf einem neuen Übertragungsweg durch das Mobilfunknetz zu übertragen sind. Der bisherige Dienstenetzknoten kann den Paketdatendienst für den betreffenden Teilnehmer für diesen Fall nicht mehr steuern.

Es ist Aufgabe der vorliegenden Erfindung, ein Verfahren und ein Mobilfunknetz anzugeben, durch das die Nutzung des Paketdatendienstes für den mobilen Teilnehmer bei einem Wechsel des Versorgungsgebiets weiterhin ermöglicht werden kann.

Diese Aufgabe wird gemäß der Erfindung hinsichtlich des Verfahrens durch die Merkmale des Patentanspruchs 1 und hinsichtlich des Mobilfunknetzes durch die Merkmale des Patentanspruchs 15 gelöst. Weiterbildungen der Erfindung sind den Unteransprüchen zu entnehmen.

Ausgehend von der Behandlung eines Paketdatendienstes im Mobilfunknetz durch Dienstenetzknoten in Verbindung mit einem Zugangsnetzknoten zur Übertragung von Paketdaten sowie einer Tunnelumschaltung bei Wechsel des Versorgungsgebiets erfolgt erfindungsgemäß
- ein Interworking des Paketdatendienstes mit Netzfunktionen eines Intelligenten Netzes, von denen eine Dienstevermittlungsfunktion mit dem jeweiligen Dienstenetzknoten zusammengeschaltet und eine Dienstesteuerungsfunktion über eine Schnittstelle an den Dienstenetzknoten mit integrierter Dienstevermittlungsfunktion angeschaltet wird, sowie
- bei dem Wechsel des mobilen Teilnehmers von dem einen Versorgungsgebiet in das andere Versorgungsgebiet zusätzlich zum Umschalten von dem einen Tunnel zu dem anderen Tunnel ein Umschalten von einer alten Assoziation, die zwischen der im bisherigen Dienstenetzknoten integrierten Dienstevermittlungsfunktion und der Dienstesteuerungsfunktion besteht, zu einer neuen Assoziation, die zwischen der im neuen Dienstenetzknoten integrierten Dienstevermittlungsfunktion und der Dienstesteuerungsfunktion besteht.

Erst durch die Kombination von
- Integration der Dienstevermittlungsfunktion in den jeweiligen Dienstenetzknoten,
- Kommunikation mit der Dienstesteuerungsfunktion,
- Umschalten von alter Assoziation zu neuer Assoziation zusätzlich zum Umschalten des Tunnels für die Paketdatenübertragung,
läßt sich in vorteilhafter Weise der Paketdatendienst wie andere IN-Dienste behandeln und steuern sowie - unbemerkt und störungsfrei - für den mobilen Teilnehmer bei einem Wechsel des Versorgungsgebiets durch Anwendung von IN-Funktionen weiterhin zur Verfügung stellen. Die Schnittstelle zwischen dem jeweiligen Dienstenetzknoten mit integrierter Dienstevermittlungsfunktion und der Dienstesteuerungsfunktion unterstützt eine einheitliche Dienstebehandlung auch bei Wechsel des Versorgungsgebiets, bei dem die Umschaltung der Assoziation mit der Tunnelumschaltung zum Austausch von Daten, Nachrichten und Signalisierungsinformationen einhergeht.

Gemäß einer Weiterbildung der Erfindung werden Zustandsdaten, die zum Umschalten der Assoziation zwischen Dienstevermittlungsfunktion und Dienstesteuerungsfunktion verwendet werden, von dem bisherigen Dienstenetzknoten an die Dienstesteuerungsfunktion vor dem Abschluß der Tunnelumschaltung gemeldet. Der Vorteil dieser Variante liegt darin, dass eine bereits vorhandene Assoziation zwischen der Dienstevermittlungsfunktion im bisherigen Dienstenetzknoten und der Dienstesteuerungsfunktion bezüglich des Teilnehmers, der wechselt, zum Melden der Assoziationsumschaltung ausgenutzt wird.

Gemäß einer alternativen Weiterbildung der Erfindung werden Zustandsdaten, die zum Umschalten der Assoziation zwischen Dienstevermittlungsfunktion und Dienstesteuerungsfunktion verwendet werden, durch die Dienstesteuerungsfunktion angefordert und von dem bisherigen Dienstenetzknoten gemeldet. Eine unmittelbare Kommunikation zwischen der Dienstevermittlungsfunktion im neuen Dienstenetzknoten und der Dienstesteuerungsfunktion zur Information über die neue Verantwortlichkeit für die Paketdatenübertragung ist die Folge.

Gemäß einer anderen alternativen Weiterbildung der Erfindung werden Zustandsdaten, die zum Umschalten der Assoziation zwischen Dienstevermittlungsfunktion und Dienstesteuerungsfunktion verwendet werden, direkt zwischen dem alten Dienstenetzknoten mit integrierter Dienstevermittlungsfunktion und dem neuen Dienstenetzknoten mit integrierter Dienstevermittlungsfunktion gemeldet. Bei dieser Variante kann in vorteilhafter Weise eine unmittelbare Übergabe der Zustandsdaten bezüglich der Assoziation schon während der Abfrage des neuen Dienstenetzknotens erfolgen, sodass von diesem Moment an bereits der neue Dienstenetzknoten für die Überwachung des Paketdatenstromes zuständig ist und wegen der neuen Assoziation beim Anmelden bei der Dienstesteuerungsfunktion bereits die aktuellen Daten liefern kann.

Gemäß weiterer günstiger Varianten der Erfindung meldet sich der neue Dienstenetzknoten mit integrierter Dienstevermittlungsfunktion entweder vor oder nach der Tunnelumschaltung bei der Dienstesteuerungsfunktion an, setzt die Überwachung der Paketdatenübertragung auf der Basis der neuen Asoziation fort und stellt die Zustandsdaten der Dienstesteuerungsfunktion zur Verfügung.

Eine vorteilhafte Weiterbildung der Erfindung sieht vor, dass von der Dienstesteuerungsfunktion Daten empfangen werden, anhand der sie erkennt, dass es sich um eine Umschaltung der Assoziation handelt und sie die Überwachung der Paketdatenübertragung übernehmen kann.

Die Erfindung wird anhand eines in der Zeichnung dargestellten Ausführungsbeispiels näher erläutert. Im einzelnen zeigen
- FIG 1: das Blockschaltbild eines Mobilfunknetzes zur Behandlung des Paketdatendienstes,
- FIG 2: das Blockschaltbild des Mobilfunknetzes beim Umschalten des Tunnels zur Paketdatenübertragung sowie der Assoziation bei Eintritt des mobilen Teilnehmers in den Versorgungsbereich eines neuen Dienstenetzknotens,
- FIG 3: eine erste Variante des Nachrichtenflusses zwischen den Netzeinrichtungen des Mobilfunknetzes bei Wechsel des Dienstenetzknotens,
- FIG 4: eine zweite Variante des Nachrichtenflusses zwischen den Netzeinrichtungen beim Wechsel des Dienstenetzknotens,
- FIG 5: eine weitere Variante des Nachrichtenflusses zwischen den Netzeinrichtungen des Mobilfunknetzes bei Wechsel des Dienstenetzknotens, und
- FIG 6: eine weitere Variante des Nachrichtenflusses zwischen den Netzeinrichtungen des Mobilfunknetzes bei Wechsel des Dienstenetzknotens.

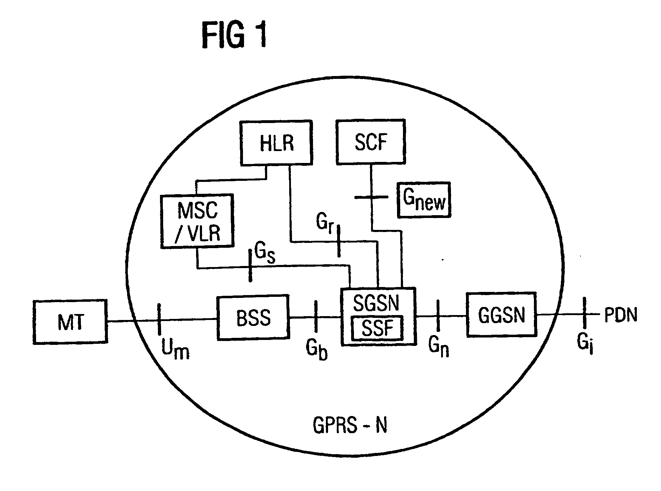

Das Blockschaltbild von FIG 1 zeigt die Netzarchitektur eines Mobilfunknetzes GPRS-N zur Behandlung des Paketdatendienstes GPRS. Bekanntlich ist das Kommunikationsendgerät MT - die Mobilstation - eines mobilen Teilnehmers über eine Luftschnittstelle Um an das Mobilfunknetz GPRS-N, d.h. an dessen Basisstationssystem BSS mit ortsfesten Basisstationen und Basisstationssteuerungen, drahtlos angekoppelt. Zur Übertragung von Paketdaten zwischen der Mobilstation MT und einem Paketdatennetz PDN weist das Mobilfunknetz GPRS-N einen oder mehrere Dienstenetzknoten SGSN und zumindest einen Zugangsnetzknoten GGSN auf. Der Zugangsnetzknoten GGSN ist dabei über eine Schnittstelle Gi mit dem Paketdatennetz PDN verbunden, während der Dienstenetzknoten SGSN an das Basisstationssystem BSS über eine Schnittstelle Gb angeschlossen ist. Zur Realisierung vermittlungstechnischer Funktionen im Mobilfunknetz GPRS-N sind eine Mobilvermittlungsstelle MSC mit zugehöriger Teilnehmerdatenbasis VLR über eine Schnittstelle Gs sowie eine Teilnehmerdatenbasis HLR über eine Schnittstelle Gr an den Dienstenetzknoten SGSN gekoppelt. Die Register VLR, HLR enthalten bekanntlich die Teilnehmerdaten des mobilen Teilnehmers, abhängig vom Aufenthaltsort seiner Mobilstation MT.

Zur Behandlung des Paketdatendienstes wie einen IN-Dienst erfolgt ein Interworking des Paketdatendienstes mit Netzfunktionen eines Intelligenten Netzes (IN), von denen eine Dienstevermittlungsfunktion SSF mit dem Dienstenetzknoten SGSN zusammengeschaltet und eine Dienstesteuerungsfunktion SCF über eine neue Schnittstelle Gnew an den Dienstenetzknoten SGSN mit integrierter Dienstevermittlungsfunktion SSF angeschaltet wird. Da der Dienstenetzknoten SGSN über die notwendigen teilnehmerbezogenen Daten verfügt, wie z.B. den aktuellen Aufenthaltsort, die Identifikationsdaten etc., ist er der optimale Ort zur IN-Anbindung. Im Dienstenetzknoten SGSN befindet sich ein Packet-Relay, das die Schnittstelle Gb zum Basisstationssystem BSS auf die Schnittstelle Gn zum Zugangsnetzknoten GGSN abbildet und die Datenpakete in beiden Richtungen weiterleitet. Dieses Packet-Relay wird zur Integration der Dienstevermittlungsfunktion SSF in den Dienstenetzknoten SGSN genutzt. Die Dienstevermittlungsfunktion SSF ist zusätzlich auch in die Signalisierung an der Gb-Schnittstelle eingebunden.

Zur Auslösung der IN-Dienste einschließlich des Paketdatendienstes sind folgende Mechanismen denkbar:
- Persönlich zugeordnete IN-Dienste, die in der Teilnehmerdatenbasis eingetragen werden,
- Fest zugeordnete IN-Dienste,
- Vom Teilnehmer aktivierte IN-Dienste.

Für den Paketdatendienst existiert zunächst keine Verbindung im Netz. Um den Dienst zu nutzen, muß sich der mobile Teilnehmer zuerst im Netz anmelden - wie auch bei verbindungsorientierten Diensten. Bei dieser Gelegenheit wird seine Identität und Berechtigung überprüft. Im zweiten Schritt muß ein Paketdatenprotokoll aktiviert werden. Das Netz GPRS-N etabliert nun einen Tunnel zwischen dem jeweils zuständigen Dienstenetzknoten SGSN und dem Zugangsnetzknoten GGSN zum Paketdatennetz PDN. In der Folge können Pakete zwischen dem Teilnehmer und dem Paketdatennetz über diesen Tunnel ausgetauscht werden.

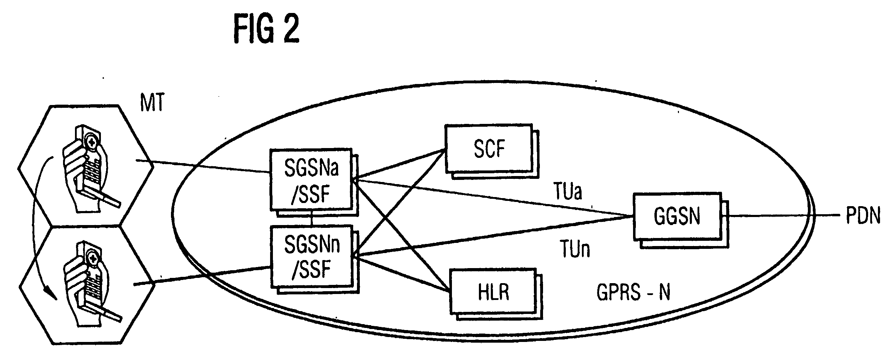

FIG 2 zeigt die Einrichtungen des Mobilfunknetzes zur Behandlung des Paketdatendienstes mit intelligenten Netzfunktionen für den Fall eines Übertritts des mobilen Teilnehmers mit seiner Mobilstation MT vom Versorgungsgebiet eines bisherigen Dienstenetzknotens SGSNa mit integrierter Dienstevermittlungsfunktion SSF zu dem Versorgungsgebiet eines neuen Dienstenetzknotens SGSNn mit integrierter Dienstevermittlungsfunktion SSF. Anders als bei der verbindungsorientierten Kommunikation erfolgt im Mobilfunknetz GPRS-N nun eine vollständige Umschaltung von einem alten Tunnel TUa, der zwischen dem bisherigen Dienstenetzknoten SGSNa mit der integrierten Dienstevermittlungsfunktion SSF und dem Zugangsnetzknoten GGSN verläuft, zu einem neuen Tunnel TUn, der zwischen dem neuen Dienstenetzknoten SGSNn mit der integrierten Dienstevermittlungsfunktion SSF und dem Zugangsnetzknoten GGSN verläuft. Die Paketdaten laufen nunmehr auf dem neuen Weg zwischen dem Zugangsnetzknoten GGSN und dem neuen Dienstenetzknoten SGSNn, d.h. die Dienstevermittlungsfunktion SSF im alten Knoten SGSNa kann ihre Funktion für den betreffenden Teilnehmer nicht mehr wahrnehmen. Daher findet zusätzlich zur Tunnelumschaltung eine Umschaltung zwischen einer alten Assoziation, die zwischen der im bisherigen Dienstenetzknoten SGSNa integrierten Dienstevermittlungsfunktion SSF und der Dienstesteuerungsfunktion SCF besteht, zu einer neuen Assoziation, die zwischen der im neuen Dienstenetzknoten SGSNn integrierten Dienstevermittlungsfunktion SSF und der Dienstesteuerungsfunktion (SCF) besteht, statt.

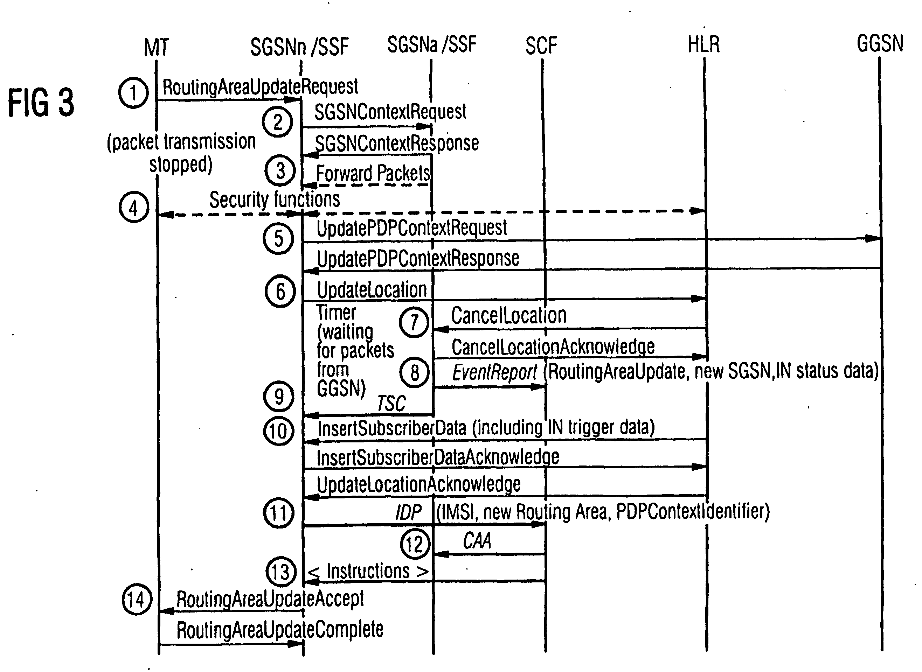

Beim Wechsel des Versorgungsbereichs bzw. Dienstenetzknotens SGSN, der die Tunnelumschaltung und insbesondere die Assoziationsumschaltung zur Folge hat, findet im Netz GPRS-N eine Signalisierung zwischen dem neuen Dienstenetzknoten SGSNn und dem alten Dienstenetzknoten SGSNa sowie zwischen dem neuen Dienstenetzknoten SGSNn und dem Zugangsnetzknoten GGSN statt. Außerdem werden Nachrichten wegen der jeweiligen Assoziation zwischen dem alten und dem neuen Dienstenetzknoten mit integrierter Dienstevermittlungsfunktion SSF und der Dienstesteuerungsfunktion SCF bzw. der Teilnehmerdatenbasis HLR ausgetauscht. Der gesamte Nachrichtenverkehr dient dazu, den Tunnel und die Assoziation umzuschalten, sowie die Steuerung und Überwachung der Paketdatenübertragung auch bei Wechsel des Versorgungsgebiets aufrechtzuhalten. Weiters werden Teilnehmerdaten dem neuen Dienstenetzknoten SGSNn bekanntgemacht und dee neue Aufenthaltsort des Teilnehmers im Netz registriert. Hierzu gibt es mehrere Varianten des Nachrichtenflusses gemäß FIG 3 bis FIG 6, der zwischen den in FIG 2 dargestellten Einrichtungen abläuft.

FIG 3 geht davon aus, daß bereits eine Assoziation zwischen dem alten Dienstenetzknoten SGSNa/SSF mit integrierter Dienstevermittlungsfunktion und der Dienstesteuerungsfunktion SCF bzgl. des Teilnehmers, der das Versorgungsgebiet bzw. den Dienstenetzknoten wechselt, besteht. Hinsichtlich dieser Assoziation wurden durch die Dienstesteuerungsfunktion SCF bereits vorher Instruktionen gesendet, um beispielsweise eine Zählung der übermittelten Pakete gemäß dem Paketdatendienst durchzuführen. Folgende Schritte charakterisieren den Nachrichtenfluss:
(1): Die Mobilstation MT sendet eine Nachricht RoutingAreaUpdateRequest aus, die zum neuen Dienstenetzknoten SGSNn gelangt und mit der eine Aktualisierung der Daten im Netz auf Grund eines Wechsels des Versorgungsgebiets gefordert wird. Das Senden von Paketen von der Mobilstation MT wird vorübergehend eingestellt.
(2): Der neue Dienstenetzknoten SGSNn sendet eine Nachricht SGSNContextRequest zum alten Dienstenetzknoten SGSNa, um die Kontext-Daten für die Mobilstation MT anzufordern. Der alte Dienstenetzknoten SGSNa sendet die Kontext-Daten in der Nachricht SGSNContextResponse zurück.
(3): Der alte SGSN startet einen Zeitgeber (Timer) und leitet Pakete, die noch über den bisherigen Tunnel - siehe FIG 2 - vom Zugangsnetzknoten GGSN eintreffen, zum neuen Dienstenetzknoten SGSNn weiter, wo sie gespeichert werden. Der alte Dienstenetzknoten SGSNa muß fortfahren, eintreffende Pakete zu zählen und ggf. Schwellwerte zu überwachen, wenn dies notwendig ist (siehe oben unter (1)). Nach Ablauf des Zeitgebers werden die Kontext-Daten für den Teilnehmer endgültig gelöscht und keine Pakete mehr weitergeleitet.
(4): Die bekannten Sicherheitsfunktionen (u.a. Authentifikation) - im vorliegenden Beispiel entsprechend des GSM-Standards - werden ausgeführt.
(5): Der neue Dienstenetzknoten SGSNn fordert nun den Zugangsnetzknoten GGSN mit einer Nachricht UpdatePDPContextRequest auf, von dem alten Tunnel auf den neuen Tunnel - siehe FIG 2 - umzuschalten. Dieser quittiert die Anforderungsnachricht mit einer Nachricht UpdatePDPContextResponse.
(6): Der neue Dienstenetzknoten SGSNn teilt dem Heimatregister HLR den neuen Aufenthaltsort des Teilnehmers in einer Nachricht UpdateLocation mit.
(7): Das Heimatregister HLR fordert mit der Nachricht CancelLocation den alten Dienstenetzknoten SGSNa auf, den Teilnehmer aus deren Datenbasis zu entfernen. Die Löschung wird mit der Nachricht CancelLocationAcknowledge bestätigt. Die Teilnehmerdaten werden allerdings erst nach Ablauf des Zeitgebers gelöscht, falls dieser aktiv ist. Nach Ablauf des Zeitgebers (bzw. falls dieser nicht aktiv ist: nach Erhalt der Nachricht CancelLocation) kann der alte Dienstenetzknoten SGSNa davon ausgehen, daß der Tunnel umgeschaltet ist und keine neuen Pakete vom Zugangsnetzknoten GGSN mehr eintreffen.
(8): Der bisherige Dienstenetzknoten SGSNa mit integrierter Dienstevermittlungsfunktion SSF meldet den Wechsel des Teilnehmers nunmehr an die Dienstesteuerungsfunktion SCF in einer Nachricht EventReport. Mit dieser Nachricht wird der Dienstesteuerungsfunktion SCF auch signalisiert, dass eine Umschaltung zu einer neuen Assoziation wegen des Wechsels des Versorgungsgebiets ansteht, erkennbar z.B. an Daten RoutingArea-Update, new SGSN, die die Nachricht EventReport enthält. Vor allem werden in dieser Nachricht EventReport Zustandsdaten INstatusdata mitgesendet, die zum Umschalten der Assoziation zwischen der Dienstevermittlungsfunktion SSF und Dienstesteuerungsfunktion SCF verwendet werden. Damit ist ein nahtloser Übergang auf den neuen Dienstenetzknoten SGSNn mit einem Bereitstellen der Zustandsdaten durch den alten Dienstenetzknoten SGSNa vor dem Abschluß der Tunnelumschaltung durchgeführt. Solche Zustandsdaten können z.B. Zählerstände über gesendete und/ oder empfangene Pakete, die Adresse des neuen Dienstenetzknotens, Vergebührungsdaten usw. umfassen.
   Im Intelligenten Netz führen bestimmte Ereignisse zu Zustandsübergängen und damit zu einem sukzessiven Nachrichtenaustausch zwischen den Intelligenten Netzfunktion SSF und SCF. Das auslösende Ereignis ("Event Detection Point") ist im vorliegenden Beispiel der netzseitige Empfang der Nachricht RoutingAreaUpdateRequest von der Mobilstation MT.
   Die Dienstesteuerungsfunktion SCF erkennt an der Nachricht EventReport, daß der Teilnehmer in das Versorgungsgebiet des neuen Dienstenetzknotens SGSNn gewechselt ist, und geht in einen Zustand über, in dem sie darauf wartet, daß sich der neue Dienstenetzknoten SGSNn bei ihr anmeldet. Weitere Aktionen können unterdessen bereits unternommen werden, so z.B. eine Verrechnung angefallener Gebühren aufgrund der gemeldeten Zählerstände.
(9): Der alte Dienstenetzknoten SGSNa sendet nun eine Nachricht TSC (TunnelSwitchingComplete) an den neuen Dienstenetzknoten SGSNn, in der er mitteilt, daß von dem bisherigen Tunnel zum neuen Tunnel nunmehr erfolgreich umgeschaltet ist und keine weiteren Pakete mehr vorliegen. Diese Nachricht dient in vorteilhafter Weise zur Synchronisierung, um zu verhindern, daß sich der neue Dienstenetzknoten SGSNn bei der Dienstesteuerungsfunktion SCF anmeldet, ohne daß diese bereits vom alten Dienstenetzknoten SGSNa die Abmeldung erhalten hat.
(10): Der neue Dienstenetzknoten SGSNn erhält die Teilnehmerdaten aus dem Heimatregister HLR über die Nachricht InsertSubscriberData. Der Dienstenetzknoten SGSNn bestätigt diese Nachricht mit InsertSubscriberDataAcknowledge. Die UpdateLocation Prozedur wird durch das Heimatregister HLR UpdateLocation abgeschlossen. In diesen Teilnehmerdaten befinden sich auch Triggerdaten INtriggerdata, die signalisieren, daß der Teilnehmer einen IN-Dienst subscribiert hat. Es ist ebenso möglich, daß innerhalb des neuen Dienstenetzknotens SGSNn fest eingestellt ist, daß nun das Intelligente Netz eingeschaltet werden muß.
(11):Der neue Dienstenetzknoten SGSNn sendet eine Initialisierungsnachricht IDP (InitialDetectionPoint) an die Dienstesteuerungsfunktion SCF, in der er mitteilt, daß der Teilnehmer sich nun in seinem Versorgungsbereich aufhält. Diese Nachricht IDP enthält mehrere Daten IMSI, newRoutingArea, PDNContextIdentifier, von denen das Datum IMSI eine Teilnehmerkennung des mobilen Teilnehmers, das Datum newRoutingArea eine Versorgungsgebietskennung und das Datum PDPContextIdentifier eine Kennung der jeweiligen Paketdatenübertragung darstellen. Das Datum PDPContextIdentifier erlaubt der Dienstesteuerungsfunktion SCF eine eindeutige Identifikation einer Paket-Session" im Mobilfunknetz. Dies ist dann notwendig, wenn beispielsweise für einen Teilnehmer mehrere Paketdatenübertragungen und damit mehrere SCF/SSF-Assoziationen existieren. Das Datum PDPContextIdentifier wird bereits in der Nachricht SGSNContextResponse an den neuen Dienstenetzknoten SGSNn übertragen. Der neue Dienstenetzknoten SGSNn/SSF mit integrierter Dienstevermittlungsfunktion geht nunmehr in einen Zustand über , in dem er auf Instruktionen der Dienstesteuerungsfunktion SCF wartet.
(12): Die Dienstesteuerungsfunktion SCF erkennt an der Nachricht IDP des neuen Dienstenetzknotens SGSNn/SSF, daß es sich um den Teilnehmer handelt, der vom alten Dienstenetzknoten SGSNa abgemeldet wurde. Die Dienstesteuerungsfunktion SCF beendet nun die Assoziation zum bisherigen Dienstenetzknoten SGSNa/SSF mit integrierter Dienstevermittlungsfunktion endgültig. Dazu wird vorzugsweise die Nachricht CAA (Cancel Association) an die Dienstevermittlungsfunktion SSF im alten Dienstenetzknoten SGSNa gesendet, damit diese die Bestätigung erhält, daß der Übergang der SSF/SCF-Assoziation auf den neuen Dienstenetzknoten SGSNn/SSF mit integrierter Dienstevermittlungsfunktion erfolgt ist.
(13): Die Dienstesteuerungsfunktion SCF sendet nun neue Instruktionen, indem z.B. neue Schwellwerte für gesendete Pakete definiert werden.
(14): Die RoutingAreaUpdate-Prozedur wird abgeschlossen durch die Nachrichten RoutingAreaUpdateAccept und RoutingAreaUpdateComplete. Die Paketübertragung von/zu dem Kommunikationsendgerät MT kann fortgesetzt werden.

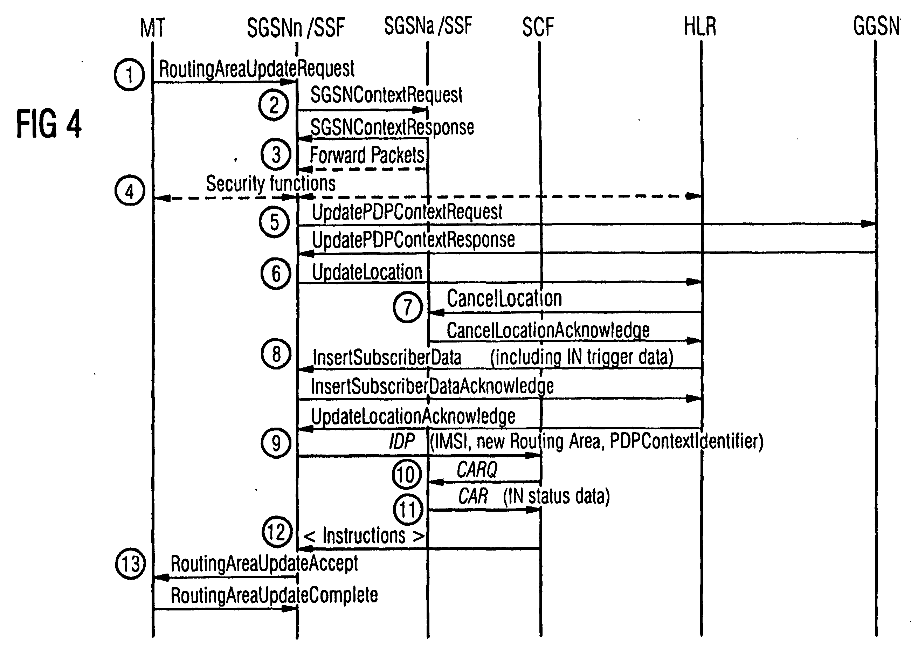

FIG 4 zeigt eine andere Variante des Nachrichtenflusses, bei der der Wechsel des Teilnehmers vom alten Dienstenetzknoten SGSNa sowie die Zustandsdaten nicht aktiv an die Dienstesteuerungsfunktion SCF gemeldet wird, sondern der neue Dienstenetzknoten SGSNn sich nach dem Umschalten vom bisherigen zum neuen Tunnel direkt bei der Dienstesteuerungsfunktion SCF anmeldet. Die Dienstesteuerungsfunktion SCF beendet daraufhin die alte Assoziation mit der im alten Dienstenetzknoten SGSNa integrierten Dienstevermittlungsfunktion SSF und fordert dabei von ihm die abschließenden Zustandsdaten an. Die Schritte (1) bis (6) des Nachrichtenflusses sind identisch mit denen zu FIG 3.
(7): Das Heimatregister HLR fordert den alten Dienstenetzknoten SGSNa auf, den Teilnehmer aus der Datenbasis zu entfernen (CancelLocation). Dies wird mit CancelLocationAcknowledge bestätigt. Die Teilnehmerdaten werden allerdings erst nach Ablauf des Zeitgebers gelöscht, falls dieser aktiv ist. Nach Ablauf des Zeitgebers (bzw. falls dieser nicht aktiv ist: nach Erhalt der CancelLocation) kann der alte Dienstenetzknoten SGSNa davon ausgehen, daß der Tunnel umgeschaltet ist und keine neuen Pakete vom Zugangsnetzknoten GGSN mehr eintreffen.
(8): Der neue Dienstenetzknoten SGSNn empfängt die Teilnehmerdaten aus dem Heimatregister HLR gemäß der Nachricht InsertSubscriberData. Der Dienstenetzknoten SGSNn bestätigt dies mit der Nachricht InsertSubscriberDataAcknowledge. Die UpdateLocation-Prozedur wird durch das Heimatregister HLR mit der Nachricht UpdateLocationAckknowledge abgeschlossen.In diesen Teilnehmerdaten befinden sich auch die Daten INtriggerdata, die signalisieren, daß der Teilnehmer einen IN-Dienst subscribiert hat. Es ist ebenso möglich, daß innerhalb des Dienstenetzknotens SGSNn fest eingestellt ist, daß nun das intelligente Netz eingeschaltet werden muß.
(9): Der neue Dienstenetzknoten SGSN sendet die Initialisierungsnachricht IDP an die Dienstesteuerungsfunktion SCF, in der er mitteilt, daß der Teilnehmer sich nun in seinem Versorgungsgebiet und damit in seiner Verantwortung aufhält. Diese Nachricht IDP enthält die - bereits zu FIG 3 beschriebenen - Daten IMSI, newRoutingArea, PDPContextIdentifier. Durch die Daten in der Nachricht IDP signalisiert der neue Dienstenetzknoten SGSNn das Umschalten zu einer neuen SSF/SCF-Assoziation. Der neue Dienstenetzknoten SGSNn/SSF mit integrierter Dienstevermittlungsfunktion geht dann in einen Zustand über, in dem er auf Instruktionen von der Dienstesteuerungsfunktion SCF wartet.
(10): Die Dienstesteuerungsfunktion SCF erkennt an der Nachricht IDP des neuen Dienstenetzknotens SGSNn/SSF, daß es sich um den Teilnehmer handelt, der vom alten Dienstenetzknoten SGSNa abgemeldet wurde. Die Dienstesteuerungsfunktion SCF beendet nun die bisherige Assoziation zu der im alten Dienstenetzknoten SGSNa integrierten Dienstevermittlungsfunktion SSF durch Aussenden der Nachricht CARQ (CancelAssociationRequest) an den Dienstenetzknoten SGSNa.
(11): Der alte Dienstenetzknoten SGSNa antwortet mit der Nachricht CAR (Cancel AssociationResponse), wobei sämtliche Zustandsdaten der bisherigen Assoziation mitgesendet werden - siehe (1).
(12): Die Dienstesteuerungsfunktion SCF sendet daraufhin neue Instruktionen, indem z.B. neue Schwellwerte für gesendete Pakete definiert werden.
(13): Die RoutingAreaUpdate-Prozedur wird abgeschlossen durch die Nachrichten RoutingAreaUpdateAccept und RoutingAreaUpdateComplete. Die Paketübertragung von/zu dem Kommunikationsendgerät MT kann fortgesetzt werden.

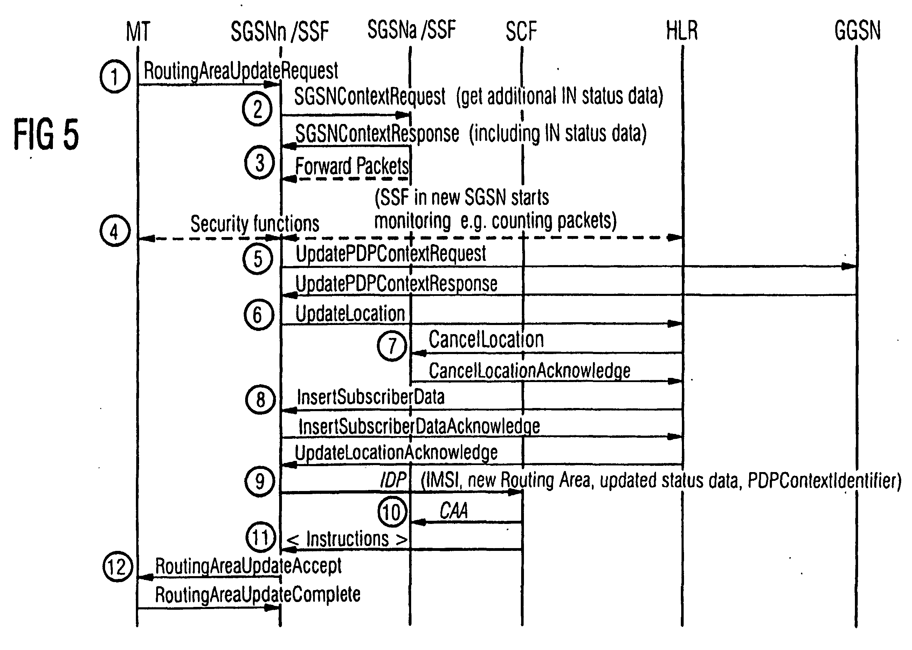

Bei einer weiteren Variante gemäß FIG 5 erfolgt eine direkte Übergabe der Zustandsdaten bzgl. der Umschaltung der SSF/SCF-Assoziation zwischen dem alten Dienstenetzknoten SGSNa und dem neuen Dienstenetzknoten SGSNn. Schon während der Kontextabfrage durch den neuen Dienstenetzknoten SGSNn werden die Zustandsdaten INstatusdata übertragen. Vor dem Umschalten vom bisherigen Tunnel zum neuen Tunnel meldet sich der neue Dienstenetzknoten SGSNn bei der Dienstevermittlungsfunktion SSF an und setzt die Überwachung der Paketdatenübertragung bzw. des Paketdatenstromes auf der Basis der neuen Assoziation fort. Beim Anmelden bei der Dienstesteuerungsfunktion SCF kann auf diese Weise die Dienstevermittlungsfunktion SSF im neuen Dienstenetzknoten SGSNn bereits frühzeitig die aktuellen Zustandsdaten mitübertragen.
(1): Die Mobilstation MT sendet eine RoutingAreaUpdateRequest-Nachricht zum neuen Dienstenetzknoten SGSNn. Das Senden von Paketen von der Mobilstation MT wird vorübergehend eingestellt.Der neue Dienstenetzknoten SGSNn fordert nach dem Erhalt des RoutingAreaUpdate-Request des Teilnehmers vom alten Dienstenetzknoten SGSNa die Kontextdaten an.
(2): In die Antwort-Nachricht SGSNContextResponse des alten Dienstenetzknotens SGSNa an den neuen Dienstenetzknoten SGSNn werden nun Zustandsdaten INstatusdata aufgenommen, die dem neuen Dienstenetzknoten SGSNn direkt signalisieren, daß für den Teilnehmer eine neue SSF/SCF-Assoziation besteht. Außerdem sind in dieser Nachricht die Zustandsdaten INstatusdata - z.B. Zählerstände für Pakete usw. - enthalten. Von diesem Zeitpunkt an wird der vom Zugangsnetzknoten GGSN eingehende Paketdatenstrom nicht mehr von der Dienstevermittlungsfunktion SSF des bisherigen Dienstenetzknotens SGSNa überwacht, sondern vom neuen Dienstenetzknoten SGSNn mit integrierter Dienstevermittlungsfunktion SSF. Ein Melden von Ereignissen an die Dienstesteuerungsfunktion SCF ist aber vorläufig noch nicht möglich.
(3): Der alte Dienstenetzknoten SGSNa startet einen Zeitgeber und leitet Pakete, die noch über den Tunnel vom Zugangsnetzknoten GGSN eintreffen, zum neuen Dienstenetzknoten SGSNn weiter, wo sie gespeichert werden. Die Pakete werden im neuen Dienstenetzknoten SGSNn gezählt. Nach Ablauf des Zeitgebers werden die Teilnehmer-Kontext-Daten endgültig gelöscht und keine Pakete mehr weitergeleitet. Die Schritte (4) - Authentifikation - bis (12) - Beenden der RoutingUpdate-Prozedur - entsprechen den Schritten in der Vorgehensweise zu FIG 4. Dabei ist von Vorteil, dass in der Initialisierungsnachricht IDP - gemäß dem Schritt (9) - die neue Assoziation bereits übernommen wurde und somit geänderte Zustandsdaten vom neuen Dienstenetzknoten SGSNn an die Dienstesteuerungsfunktion SCF gemeldet werden können.

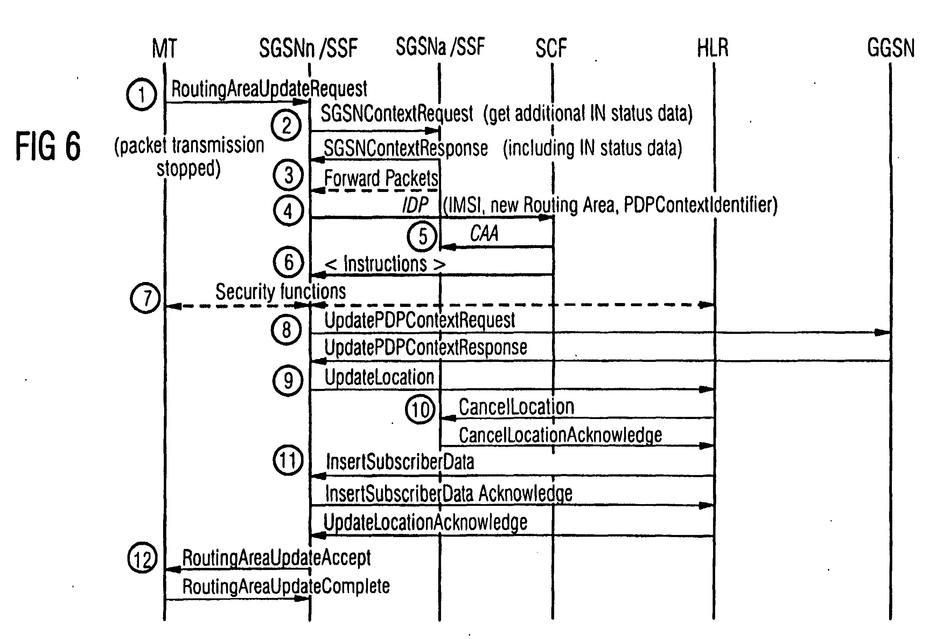

Bei einer weiteren Variante gemäß FIG 6 erfolgt ebenfalls eine direkte Übergabe der Zustandsdaten bzgl. der Umschaltung der SSF/SCF-Assoziation zwischen dem alten Dienstenetzknoten SGSNa und dem neuen Dienstenetzknoten SGSNn. Schon während der Kontextabfrage durch den neuen Dienstenetzknoten SGSNn werden die Zustandsdaten INstatusdata übertragen. Im Unterschied zu FIG 5 erfolgt die Anmeldung des neuen Dienstenetzknotens SGSNn bei der Dienstesteuerungsfunktion SCF erst nach dem Umschalten vom bisherigen Tunnel zum neuen Tunnel. Der alte Dienstenetzknotens SGSNa behält die Kontrolle der Paketdatenübertragung vor und während des Umschaltens bei. Die Schritte (1) bis (3) sind entsprechend dem Nachrichtenfluss gemäß FIG 5 durchzuführen. Die notwendigen Daten zum Triggern des IN-Dienstes (z.B. CAMEL-Service-Indication) werden dabei vom alten Dienstenetzknoten SGSNa in der Nachricht SGSNContextResponse mitgeliefert. Die Dienstevermittlungsfunktion SSF im neuen Dienstenetzknoten SGSNn beginnt unmittelbar nach der Kontextabfrage bereits mit der Überwachung des Paketdatenstromes, um der Dienstesteuerungsfunktion SCF auf Anforderung später Zustandsdaten mitteilen zu können.

Bereits im Schritt (4) wird die Initialisierungsnachricht IDP mit den - oben beschriebenen - Daten IMSI, newRoutingArea, PDPContextIdentifier vom neuen Dienstenetzknoten SGSNn an die Dienstesteuerungsfunktion SCF gesendet, in der er u.a. mitteilt, daß der Teilnehmer sich nun in seinem Versorgungsgebiet und damit in seiner Verantwortung aufhält.

Im Schritt (5) beendet die Dienstesteuerungsfunktion SCF die bisherige Assoziation zum alten Dienstenetzknoten SGSNa/SSF mit integrierter Dienstevermittlungsfunktion durch Aussenden der Nachricht CAA (Cancel Association). Gemäß dem Schritt (6) geht der neue Dienstenetzknoten SGSNn/SSF mit integrierter Dienstevermittlungsfunktion in einen Zustand über, in dem er auf Instruktionen von der Dienstesteuerungsfunktion SCF wartet.

Die restlichen Schritte (7) bis (11) in FIG 6 sind identisch mit den Schritten (4) bis (8) gemäß FIG 5. Der Schritt (12) in FIG 6 gleicht dem Schritt (12) in FIG 5, sodass diese Schritte analog zu obigen Erläuterungen und Vorgehensweisen ausgeführt werden.

## Patentansprüche

1. Verfahren zur Behandlung eines Paketdatendienstes in einem Mobilfunknetz, bei dem Paketdaten zwischen einem Kommunikationsendgerät (MT) eines mobilen Teilnehmers und Dienstenetzknoten (SGSNa, SGSNn) eines Mobilfunknetzes und einem Zugangsnetzknoten (GGSN) des Mobilfunknetzes für die Anbindung an ein Paketdatennetz (PDN) übertragen werden und bei dem bei einem Wechsel des mobilen Teilnehmers von einem Versorgungsgebiet eines bisherigen Dienstenetzknotens (SGSNa) in ein Versorgungsgebiet eines neuen Dienstenetzknotens (SGSNn) von einem bisherigen Tunnel (TUa), der zwischen dem bisherigen Dienstenetzknoten (SGSNa) und dem Zugangsnetzknoten (GGSN) verläuft, zu einem neuen Tunnel (TUn), der zwischen dem neuen Dienstenetzknoten (SGSNn) und dem Zugangsnetzknoten (GGSN) verläuft, umgeschaltet wird,
**dadurch gekennzeichnet,**
- **dass** ein Interworking des Paketdatendienstes mit Netzfunktionen eines Intelligenten Netzes erfolgt, von denen eine Dienstevermittlungsfunktion (SSF) mit dem jeweiligen Dienstenetzknoten (SGSNa, SGSNn) zusammengeschaltet und eine Dienstesteuerungsfunktion (SCF) über eine Schnittstelle (Gnew) an den jeweiligen Dienstenetzknoten (SGSNa, SGSNn) mit integrierter Dienstevermittlungsfunktion (SSF) angeschaltet wird, und
- **dass** bei dem Wechsel des mobilen Teilnehmers von dem einen Versorgungsgebiet in das andere Versorgungsgebiet zusätzlich zum Umschalten von dem bisherigen Tunnel (TUa) zu dem neuen Tunnel (TUn) von einer alten Assoziation, die zwischen der im bisherigen Dienstenetzknoten (SGSNa) integrierten Dienstevermittlungsfunktion (SSF) und der Dienstesteuerungsfunktion (SCF) besteht, zu einer neuen Assoziation, die zwischen der im neuen Dienstenetzknoten (SGSNn) integrierten Dienstevermittlungsfunktion (SSF) und der Dienstesteuerungsfunktion (SCF) besteht, umgeschaltet wird.

2. Verfahren nach Anspruch 1,
**dadurch gekennzeichnet,**
**dass** Zustandsdaten (IN status data), die zum Umschalten der Assoziation zwischen Dienstevermittlungsfunktion (SSF) und Dienstesteuerungsfunktion (SCF) verwendet werden, von dem bisherigen Dienstenetzknoten (SGSNa) an die Dienstesteuerungsfunktion (SCF) vor dem Abschluß der Tunnelumschaltung gemeldet werden.

3. Verfahren nach Anspruch 2,
**dadurch gekennzeichnet,**
**dass** die Zustandsdaten (IN status data) anhand einer Nachricht (EventReport) gemeldet werden, die von der im bisherigen Dienstenetzknoten (SGSNa) integrierten Dienstevermittlungsfunktion (SSF) initiiert wird.

4. Verfahren nach Anspruch 2 oder 3,
**dadurch gekennzeichnet,**
**dass** von dem bisherigen Dienstenetzknoten (SGSNa) eine Nachricht (TSC) an den neuen Dienstenetzknoten (SGSNn) gesendet wird, in der er mitteilt, daß von dem bisherigen Tunnel (TUa) zum neuen Tunnel (TUn) erfolgreich umgeschaltet ist und keine weiteren Pakete mehr vorliegen.

5. Verfahren nach Anspruch 1,
**dadurch gekennzeichnet,**
**dass** Zustandsdaten (IN status data), die zum Umschalten der Assoziation zwischen Dienstevermittlungsfunktion (SSF) und Dienstesteuerungsfunktion (SCF) verwendet werden, durch die Dienstesteuerungsfunktion (SCF) angefordert und von dem bisherigen Dienstenetzknoten (SGSNa) gemeldet werden.

6. Verfahren nach Anspruch 1,
**dadurch gekennzeichnet,**
**dass** Zustandsdaten (IN status data), die zum Umschalten der Assoziation zwischen Dienstevermittlungsfunktion (SSF) und Dienstesteuerungsfunktion (SCF) verwendet werden, direkt zwischen dem bisherigen Dienstenetzknoten (SGSNa) mit integrierter Dienstevermittlungsfunktion (SSF) und dem neuen Dienstenetzknoten (SGSNn) mit integrierter Dienstevermittlungsfunktion (SSF) gemeldet werden.

7. Verfahren nach Anspruch 6,
**dadurch gekennzeichnet,**
**dass** der neue Dienstenetzknoten (SGSNn) mit integrierter Dienstevermittlungsfunktion (SSF) sich vor der Tunnelumschaltung bei der Dienstesteuerungsfunktion (SCF) anmeldet und die Überwachung der Paketdatenübertragung auf der Basis der neuen Assoziation fortsetzt sowie die Zustandsdaten (IN status data) der Dienstesteuerungsfunktion (SCF) zur Verfügung stellt.

8. Verfahren nach Anspruch 6,
**dadurch gekennzeichnet,**
**dass** der neue Dienstenetzknoten (SGSNn) mit integrierter Dienstevermittlungsfunktion (SSF) sich nach der Tunnelumschaltung bei der Dienstesteuerungsfunktion (SCF) anmeldet und die Überwachung der Paketdatenübertragung auf der Basis der neuen Assoziation fortsetzt sowie die Zustandsdaten (IN status data) der Dienstesteuerungsfunktion (SCF) zur Verfügung stellt.

9. Verfahren nach Anspruch 8,
**dadurch gekennzeichnet,**
**dass** der bisherige Dienstenetzknoten (SGSNa) mit integrierter Dienstevermittlungsfunktion (SSF) die Überwachung der Paketdatenübertragung vor und während der Tunnelumschaltung beibehält.

10. Verfahren nach einem der vorhergehenden Ansprüche,
**dadurch gekennzeichnet,**
**dass** von der Dienstesteuerungsfunktion (SCF) Daten (IMSI, newRoutingArea, PDPContextIdentifier) empfangen werden, anhand der sie erkennt, dass es sich um eine Umschaltung der Assoziation handelt und sie die Überwachung der Paketdatenübertragung fortsetzen kann.

11. Verfahren nach Anspruch 10,
**dadurch gekennzeichnet,**
**dass** die Daten zumindest eine Teilnehmerkennung (IMSI), eine Kennung (PDPContextIdentifier) der jeweiligen Paketdatenübertragung und/oder eine Versorgungsgebietskennung (newRoutingArea) enthalten.

12. Verfahren nach einem der vorhergehenden Ansprüche,
**dadurch gekennzeichnet,**
**dass** von dem neuen Dienstenetzknoten (SGSNn) mit integrierter Dienstevermittlungsfunktion (SSF) eine Initialisierungsnachricht (IDP) zur Dienstesteuerungsfunktion (SCF) gesendet wird, die daraufhin eine Nachricht (CAA, CARQ) zur Beendigung der bisherigen Assoziation zum bisherigen Dienstenetzknoten (SGSNa) sendet.

13. Verfahren nach Anspruch 12,
**dadurch gekennzeichnet,**
**dass** der neue Dienstenetzknoten (SGSNn) mit integrierter Dienstevermittlungsfunktion (SSF) in einen Zustand übergeht, in dem er auf Instruktionen der Dienstesteuerungsfunktion (SCF) hinsichtlich der weiteren Übertragung von Paketdaten wartet.

14. Verfahren nach einem der vorhergehenden Ansprüche,
**dadurch gekennzeichnet,**
**dass** Triggerdaten (INtriggerdata), die das Interworking mit den Netzfunktionen des Intelligenten Netzes signalisieren, dem neuen Dienstenetzknoten (SGSNn) mit integrierter Dienstevermittlungsfunktion (SSF) zur Verfügung gestellt werden.

15. Mobilfunknetz zur Behandlung eines Paketdatendienstes mit einem Zugangsnetzknoten (GGSN) für die Anbindung an ein Paketdatennetz (PDN) und mit Dienstenetzknoten (SGSNa, SGSNn) zur Übertragung von Paketdaten von einem oder zu einem Kommunikationsendgerät (MT) eines mobilen Teilnehmers, wobei die Paketdatenübertragung bei einem Wechsel des mobilen Teilnehmers von einem Versorgungsgebiet eines bisherigen Dienstenetzknotens (SGSNa) in ein Versorgungsgebiet eines neuen Dienstenetzknotens (SGSNn) von einem bisherigen Tunnel (TUa), der zwischen dem bisherigen Dienstenetzknoten (SGSNa) und dem Zugangsnetzknoten (GGSN) verläuft, zu einem neuen Tunnel (TUn), der zwischen dem neuen Dienstenetzknoten (SGSNn) und dem Zugangsnetzknoten (GGSN) verläuft, umschaltbar ist
**dadurch gekennzeichnet,**
- **dass** zum Interworking des Paketdatendienstes mit Netzfunktionen eines Intelligenten Netzes der jeweilige Dienstenetzknoten (SGSNa, SGSNb) derart angeordnet ist, dass er mit einer Dienstevermittlungsfunktion (SSF) zusammengeschaltet und eine Dienstesteuerungsfunktion (SCF) über eine Schnittstelle (Gnew) an den jeweiligen Dienstenetzknoten (SGSNa, SGSNn) mit integrierter Dienstevermittlungsfunktion (SSF) angeschaltet ist, und
- **dass** bei dem Wechsel des mobilen Teilnehmers von dem einen Versorgungsgebiet in das andere Versorgungsgebiet zusätzlich zum Umschalten von dem bisherigen Tunnel (TUa) zu dem neuen Tunnel (TUn) von einer alten Assoziation, die zwischen der im bisherigen Dienstenetzknoten (SGSNa) integrierten Dienstevermittlungsfunktion (SSF) und der Dienstesteuerungsfunktion (SCF) besteht, zu einer neuen Assoziation, die zwischen der im neuen Dienstenetzknoten (SGSNn) integrierten Dienstevermittlungsfunktion (SSF) und der Dienstesteuerungsfunktion (SCF) besteht, umgeschaltet wird.

## Claims

1. Method for handling a packet data service in a mobile radio network in which packet data are transmitted between a communication terminal (MT) of a mobile subscriber and serving network nodes (SGSNa, SGSNn) of a mobile radio network and a gateway network node (GGSN) of the mobile radio network for interworking with a packet data network (PDN) and in which, during a change of the mobile subscriber from a service area of a previous serving network node (SGSNa) into a service area of a new serving network node (SGSNn), a switch-over from a previous tunnel (TUa), which extends between the previous serving network node (SGSNa) and the gateway network node (GGSN), to a new tunnel (TUn), which extends between the new serving network node (SGSNn) and the gateway network node (GGSN) occurs,
**characterized in that**
- interworking of the packet data service with network functions of an intelligent network, a service switching function (SSF) of which is interconnected with the respective serving network node (SGSNa, SGSNn) and a service control function (SCF) of which is connected to the respective serving network node (SGSNa, SGSNn) with integrated service switching function (SSF) via an interface (Gnew), occurs and **in that**
- during the change of the mobile subscriber from one service area to the other service area, in addition to switching from the previous tunnel (TUa) to the new tunnel (TUn), there is a switch-over from an old association which exists between the service switching function (SSF) integrated in the previous serving network node (SGSNa) and the service control function (SCF), to a new association which exists between the service switching function (SSF) integrated in the new serving network node (SGSNn) and the service control function (SCF).

2. Method according to Claim 1, **characterized in that** status data (IN status data), which are used for switching the association between service switching function (SSF) and service control function (SCF), are reported by the previous serving network node (SGSNa) to the service control function (SCF) before the tunnel switch-over is concluded.

3. Method according to Claim 2, **characterized in that** the status data (IN status data) are reported by means of a message (EventReport) which is initiated by the service switching function (SSF) integrated in the previous serving network node (SGSNa).

4. Method according to Claim 2 or 3, **characterized in that** the previous serving network node (SGSNa) sends a message (TSC) to the new serving network node (SGSNn) in which it reports that switch-over from the previous tunnel (TUa) to the new tunnel (TUn) has been successful and there are no further packets.

5. Method according to Claim 1, **characterized in that** status data (IN status data), which are used for switching the association between service switching function (SSF) and service control function (SCF), are requested by the service control function (SCF) and reported by the previous serving network node (SGSNa).

6. Method according to Claim 1, **characterized in that** status data (IN status data), which are used for switching the association between service switching function (SSF) and service control function (SCF), are reported directly between the previous serving network node (SGSNa) with integrated service switching function (SSF) and the new serving network node (SGSNn) with integrated service switching function (SSF).

7. Method according to Claim 6, **characterized in that** the new serving network node (SGSNn) with integrated service switching function (SSF) registers with the service control function (SCF) before the tunnel switch-over and continues to monitor the packet data transmission on the basis of the new association and provides the status data (IN status data) to the service control function (SCF).

8. Method according to Claim 6, **characterized in that** the new serving network node (SGSNn) with integrated service switching function (SSF) registers with the service control function (SCF) after the tunnel switch-over and continues to monitor the packet data transmission on the basis of the new association and provides the status data (IN status data) to the service control function (SCF).

9. Method according to Claim 8, **characterized in that** the previous serving network node (SGSNa) with integrated service switching function (SSF) retains the monitoring of the packet data transmission before and during the tunnel switch-over.

10. Method according to one of the preceding claims, **characterized in that** the service control function (SCF) receives data (IMSI, newRoutingArea, PDPContextIdentifier) by means of which it recognizes that this is a switch-over of the association and it can continue to monitor the packet data transmission.

11. Method according to Claim 10, **characterized in that** the data contain at least a subscriber identifier (IMSI), an identifier (PDPContextIdentifer) of the respective packet data transmission and/or a service area identifier (newRoutingArea).

12. Method according to one of the preceding claims, **characterized in that** the new serving network node (SGSNn) with integrated service switching function (SSF) sends an initialization message (IDP) to the service control function (SCF) which then sends a message (CAA, CARQ) for ending the previous association to the previous serving network node (SGSNa).

13. Method according to Claim 12, **characterized in that** the new serving network node (SGSNn) with integrated service switching function (SSF) changes into a state in which it waits for instructions of the service control function (SCF) with regard to the further transmission of packet data.

14. Method according to one of the preceding claims, **characterized in that** trigger data (INtriggerdata), which signal the interworking with the network functions of the intelligent network, are provided to the new serving network node (SGSNn) with integrated service switching function (SSF).

15. Mobile radio network for handling a packet data service with a gateway network node (GGSN) for interworkinq with a packet data network (PDN) and with serving network nodes (SGSNa, SGSNn) for transmitting packet data from a or to a communication terminal (MT) of a mobile subscriber, wherein the packet data transmission, during a change of the mobile subscriber from a service area of a previous serving network node (SGSNa) into a service area of a new serving network node (SGSNn), can be switched over from a previous tunnel (TUa), which extends between the previous serving network node (SGSNa) and the gateway network node (GGSN), to a new tunnel (TUn), which extends between the new serving network node (SGSNn) and the gateway network node (GGSN),
**characterized in that**
- for the interworking of the packet data service with network functions of an intelligent network, the respective serving network node (SGSNa, SGSNn) is arranged in such a manner that it is interconnected with a service switching function (SSF) and a service control function (SCF) is connected to the respective serving network node (SGSNa, SGSNn) with integrated service switching function (SSF) via an interface (Gnew), and **in that**
- during the change of the mobile subscriber from one service area to the other service area, in addition to switching from the previous tunnel (TUa) to the new tunnel (TUn), there is a switch-over from an old association which exists between the service switching function (SSF) integrated in the previous serving network node (SGSNa) and the service control function (SCF), to a new association which exists between the service switching function (SSF) integrated in the new serving network node (SGSNn) and the service control function (SCF).

## Revendications

1. Procédé de traitement d'un service de données en paquets dans un réseau de téléphonie mobile, dans lequel des données en paquets sont transmises entre un terminal de communication (MT) d'un abonné mobile et un noeud de réseau de service (SGSNa, SGSNn) d'un réseau de téléphonie mobile et un noeud de réseau d'accès (GGSN) du réseau de téléphonie mobile pour le raccordement à un réseau de données en paquets (PDN) et dans lequel, lors du passage de l'abonné mobile d'une région d'alimentation d'un ancien réseau de service (SGSNa) dans une région d'alimentation d'un nouveau noeud de réseau de service (SGSNn), on commute d'un tunnel existant jusque là (TUa), qui s'étend entre l'ancien noeud de réseau de service (SGSNa) et le noeud de réseau d'accès (GGSN), à un nouveau tunnel (TUn) qui s'étend entre le nouveau noeud de réseau de service (SGSNn) et le noeud de réseau d'accès (GGSN),
**caractérisé en ce que**
- un concours du service de données en paquets est effectué avec des fonctions de réseau d'un réseau intelligent, dont une fonction de communication de service (SSF) est interconnectée au noeud de réseau de service respectif (SGSNa, SGSNn) et une fonction de commande de service (SCF) est connectée par l'intermédiaire d'une interface (Gnew) au noeud de réseau de service respectif (SGSNa, SGSNn) comportant une fonction (SSF)de communication de service intégrée, et
- lors du passage d'un abonné mobile de l'une des régions d'alimentation dans l'autre r égion d'alimentation, p our c ommuter e n plus du tunnel existant jusque là (TUa) au nouveau tunnel (TUn), on commute d'une ancienne association, qui existe entre la fonction de communication de service (SSF) intégrée dans l'ancien noeud de réseau de service (SGSNa) et la fonction de commande de service ( SCF), à une nouvelle association qui existe entre la fonction de communication de service (SSF) intégrée dans le nouveau noeud de réseau de service (SGSNn) et la fonction de commande de service (SCF).

2. Procédé selon la revendication 1, **caractérisé en ce que** des données d'état (IN status data), qui sont utilisées pour commuter l'association entre une fonction de communication de service (SSF) et une fonction de commande de service (SCF), sont envoyées de l'ancien noeud de réseau de service (SGSNa) à la fonction de commande de service (SCF) avant la fin de la commutation de tunnel.

3. Procédé selon la revendication 2, **caractérisé en ce que** les données d'état (IN status data) sont envoyées en s'appuyant sur une information (EventReport) qui est délivrée par la fonction de communication de service (SSF) intégrée dans l'ancien noeud de réseau de service (SGSNa).

4. Procédé selon la revendication 2 ou 3, **caractérisé en ce qu'**une information (TSC) est envoyée du noeud de réseau de service (SGSNa) existant jusque là au nouveau noeud de réseau de service (SGSNn), dans lequel ladite information informe que la commutation du tunnel (TUa) existant jusque là au nouveau tunnel (TUn) a été réalisée avec succès et qu'il n'existe plus aucun autre paquet.

5. Procédé selon la revendication 1, **caractérisé en ce que** les données d'état (IN status data), qui sont utilisés pour commuter l'association entre une fonction de communication de service (SSF) et une fonction de commande de service (SCF), sont demandées par la fonction de commande de service (SCF) et sont envoyées par le noeud de réseau de service (SGSNa) existant jusque là.

6. Procédé selon la revendication 1, **caractérisé en ce que** des données d'état (IN status data), qui sont utilisées pour commuter l'association entre une fonction de communication de service (SSF) et une fonction de commande de service (SCF), sont envoyées directement entre le noeud de réseau de service (SGSNa) existant jusque là comportant une fonction de communication de service intégrée (SSF) et le nouveau noeud de réseau de service (SGSNn) comportant une fonction de communication de service intégrée (SSF).

7. Procédé selon la revendication 6, **caractérisé en ce que** le nouveau noeud de réseau de service (SGSNn) comportant une fonction de communication de service intégrée (SSF) s'annonce avant la commutation de tunnel lors de la fonction de commande de service (SCF) et poursuit la surveillance de la transmission de données en paquets en se fondant sur la nouvelle association et met à disposition les données d'état (IN status data) de la fonction de commande de service (SCF).

8. Procédé selon la revendication 6, **caractérisé en ce que** le nouveau noeud de réseau de service (SGSNn) comportant une fonction de communication de service intégrée (SSF) s'annonce après la commutation de tunnel lors de la fonction de commande de service (SCF) et poursuit la surveillance de la transmission de données en paquets en se fondant sur la nouvelle association et met à disposition les données d'état (IN status data) de la fonction de commande de service (SCF).

9. Procédé s elon la revendication 8 , c aractérisé en ce que le noeud d e réseau de service (SGSNa) existant jusque là comportant une fonction de communication de service intégrée (SSF) conserve la surveillance de la transmission de données en paquets avant et pendant la commutation de tunnel.

10. Procédé selon l'une des revendications précédentes, **caractérisé en ce que** des données (IMSI, newRoutingArea, PDPContextldentifier) sont reçues par la fonction de commande de service et l'informe qu'il s'agit d'une commutation de l'association et qu'elle peut poursuivre la surveillance de la transmission de données en paquets.

11. Procédé selon la revendication 10, **caractérisée en ce que** les données contiennent au moins une caractéristique d'abonné (IMSI), une caractéristique (PDPContextldentifier) de la transmission de données en paquets respective et/ou une caractéristique de région d'alimentation (newRoutingArea).

12. Procédé selon l'une des revendications précédentes, **caractérisé en ce qu'**une information d'initialisation (IDP) est envoyée par le nouveau noeud de réseau de service (SGSNn) comportant une fonction de communication de service intégrée (SCF) à la fonction de commande de service (SCF) qui envoie alors une information (CAA, CARQ) pour mettre fin à l'association existant jusque là à l'ancien noeud de réseau de service (SGSNa).

13. Procédé selon la revendication 12, **caractérisé en ce que** le nouveau noeud de réseau de service (SGSNn) comportant une fonction de communication de service intégrée (SSF) passe en un état dans lequel il attend des instructions de la fonction de commande de service (SCF) relatives à la confirmation de la transmission de données en paquets.

14. Procédé selon l'une des revendications précédentes, **caractérisé en ce que** des données de déclenchement (INtriggerdata), qui signalent le concours avec les fonctions de réseau du réseau intelligent, sont mises à disposition au nouveau noeud de réseau de service (SGSNn) comportant une fonction de communication de service intégrée (SSF).

15. Réseau de communication mobile destiné à traiter un service de données en paquets comportant un noeud de réseau d'accès (GGSN) pour le raccordement à un réseau de données en paquets (PDN) et comportant des noeuds de réseau de service (SGSNa, SGSNn) pour transmettre des données en paquets depuis ou vers un terminal de communication (MT) d'un abonné mobile, la transmission de données en paquets étant commutée, lors d'un passage de l'abonné mobile d'une région d'alimentation d'un noeud de réseau de service existant jusque là (SGSNa) dans une région d'alimentation d'un nouveau noeud de réseau de service (SGSNn), d'un tunnel existant jusque là (TUa), qui s'étend entre le noeud de réseau de service existant jusque là (SGSNa) et le noeud de réseau d'accès (GGSN), à un nouveau tunnel (TUn) qui s'étend entre le nouveau noeud de réseau de service (SGSNn) et le noeud de réseau d'accès (GGSN),
**caractérisé en ce que**
- pour réaliser le concours du service de données en paquets avec des fonctions de réseau d'un réseau intelligent, le noeud de réseau de service respectif (SGSNa, SGSNn) est disposé d e façon à être interconnecté avec une fonction de communication de service (SSF) et de telle sorte qu'une fonction de commande de service (SCF) est connectée par l'intermédiaire d'une interface (Gnew) au noeud de réseau de service respectif (SGSNa, SGSNn) comportant une fonction de communication de service intégrée (SSF), et
- lors du passage d'un abonné mobile de l'une des régions d'alimentation dans l'autre région d'alimentation, pour commuter en plus du tunnel (TUa) existant jusque là au nouveau tunnel (TUn), on commute d'une ancienne association, qui existe entre la fonction de communication de service (SSF) intégrée dans l'ancien noeud de réseau de service (SGSNa) et la fonction de commande de service (SCF), à une nouvelle association qui existe entre la fonction de communication de service (SSF) intégrée dans le nouveau noeud de réseau de service (SGSNn) et la fonction de commande de service (SCF).
